# EUROPÄISCHE PATENTSCHRIFT

(11) **EP 1 211 045 B1**
(45) Veröffentlichungstag und Bekanntmachung des Hinweises auf die Patenterteilung: **18.04.2007**
(21) Anmeldenummer: 01128630.9
(22) Anmeldetag: 30.11.2001
(51) Int. Cl.: B29C 47/00, B29C 47/10, B29C 47/40, B29C 47/50, B29C 47/58

(54) **Verfahren und Anlage zur Herstellung von faserverstärkten Kunststoffmassen**
Method and apparatus for producing fiberreinforced polymer materials
Procédé et dispositif pour la fabrication de compositions polymères renforcées de fibres

(30) Priorität: 30.11.2000 DE 10059525
(43) Veröffentlichungstag der Anmeldung: 05.06.2002
(73) Patentinhaber: Dieffenbacher GmbH + Co. KG, 75031 Eppingen (DE)
(72) Erfinder: Brüssel, Richard, 75056 Sulzfeld (DE)
(74) Vertreter: Hartdegen, Anton

(56) Entgegenhaltungen:
- EP-A- 0 960 715
- WO-A-99/56936
- DE-A- 2 351 328
- DE-A- 19 836 787
- US-A- 5 110 275
- US-A- 5 879 602
- PATENT ABSTRACTS OF JAPAN vol. 006, no. 224 (M-170), 9. November 1982 (1982-11-09) -& JP 57 126639 A (TOYODA GOSEI KK), 6. August 1982 (1982-08-06)

## Beschreibung

Die Erfindung bezieht sich auf ein Verfahren zur Herstellung von faserverstärkten Kunststoffmassen gemäß dem Oberbegriff des Anspruchs 1. Sie betrifft ferner eine Anlage zur Durchführung des Verfahrens nach dem Oberbegriff des Anspruches 4.

Aus US 5,879,602 A und EP 0 960 715 A2 sind Vorrichtungen und Verfahren zur Imprägnierung von Fasersträngen mit Kunststoffmaterial bekannt geworden. Dabei werden in der US 5,879,602 A in einem Imprägnierkopf Kunststoffschichten mit Langfasern zusammengeführt und in einen weiteren Extruder zur Vermischung eingespeist. Das hier angewendete Verfahren weist neben großem baulichem Aufwand auch den Nachteil auf, dass eine große Menge an Material von Kunststoff im gesamten System vorhanden ist. In der EP 0 960 715 A2 werden das Kunststoffmaterial in einer Einfüllöffnung eines Extruders mit den Fasersträngen zusammengeführt, wobei hier die Problematik auftritt, dass es zu Knäulbildung der Fasern im Einzugbereich des Mischextruders kommen kann und so mit zu Inhomogenitäten.

Ein gattungsgemäßes Verfahren ist aus der DE 198 36 787 A1 bekannt. Das Verfahren und der darin beschriebene Plastifizierextruder haben sich in der Praxis bewährt. Sie sind jedoch für spezielle Anwendungen, insbesondere Fasern enthaltendes Schüttmaterial, noch verbesserungsfähig.

Bekannt ist weiter, daß sogenannte Stäbchengranulate, das sind derzeit meist glasfaserverstärkte Kunststoffstäbchen, für das Plastifikat-Fließpressen verwendet werden. Die Stäbchengranulate sind dafür im allgemeinen 25 mm lang und werden in langsam umlaufenden Einschneckenextrudern aufgeschmolzen. Dafür sind relativ große Extruder für brauchbare Aufschmelzleistungen erforderlich, weil möglichst ohne Scherenergie (Dissipation), sondern weitgehendst durch Wärmeleitung diese Faser-Kunststoffstäbchen aufgeschmolzen werden müssen. Diese schonende Aufschmelzung ist erforderlich, um die Ausgangsfaserlänge zu einem möglichst großen Anteil zu erhalten. Bei diesen Stäbchengranulaten handelt es sich um Halbzeugprodukte, bei dem der Fasergehalt auf das zu fertigende Bauteil eingestellt ist. Da dieses Halbzeug in der Herstellung relativ teuer ist, wird zwischenzeitlich eine Methode bevorzugt, bei der sogenannte Konzentratstäbchen mit möglichst hohem Fasergehalt verwendet werden. Diese Konzentratstäbchen werden dann im Aufschmelzextruder mit kostengünstigem Kunststoffgranulat auf den im Bauteil erforderlichen Fasergehalt gemischt. Diese Methode hat zwar die Materialkosten günstig beeinflußt, ober die Extruder sind dadurch nicht kleiner, bzw. die Aufschmelzleistung nicht größer geworden.

Dadurch, daß es sich bei den in der Praxis geforderten Aufschmelzleistungen um immer größere Extruder mit größeren Materialinhalten handelt, steigt auch die Faserschädigung und das Verhalten verschlechtert sich bei kurzen Zykluszeiten in Bezug auf die Plastifikatsgewichtstoleranz und das Anfahrverhalten.

Weiter ist bekannt, daß für den Einzug von nicht klebrigen Materialien mit geringem Schüttgewicht in den Extruder üblicherweise mit relativ großen Schnekkensteigungen und Nutbuchsen gearbeitet wird, um den Materialvortrieb in dem offenen Einzugsbereich zu steigern.

Wenn Schüttgut, wie zum Beispiel geschnittene Fasern - mit in einem separaten Extruder aufgeschmolzenen Kunststoff zusammengebracht werden soll, dann wird bekanntlich mit dem Extruder, in welchem die Fasern eingezogen werden, stromabwärts im geschlossenen Bereich der aufgeschmolzene Kunststoff dem Schüttgut zudosiert. Dies hat jedoch den Nachteil, daß sich die Fasern und der aufgeschmolzene Kunststoff bei dem Zusammentreffen nicht gleichmäßig vermischen, sondern Zonen von Faser- und Kunststoffanreicherungen bilden. Diese müssen dann stromabwärts über Mischelemente wieder aufgelöst werden, um eine gleichmäßige Vermischung und Tränkung der Fasern zu erreichen. Dies bedeutet, daß eine entsprechend lange Verweilzeit im Extruder mit Mischelementen erforderlich ist, was bekannterweiseFaserschädigungen und große Materialinhalte bedeutet.

Bei dem Versuch aufgeschmolzenen Kunststoff und Schüttgut gleichzeitig in einer Einfüllöffnung eines Extruders zu dosieren und dabei zu vermischen, hat man es sehr schnell mit Verklebungen und damit Brückenbildung zu tun, was die Zudosierung behindert bzw. blockiert.

Der Erfindung liegt die Aufgabe zugrunde, ein Verfahren anzugeben, mit dem für das Plastifikat-Fließpreßverfahren von Lang-Faserverstärkten-Thermoplasten (LFT) ein Abmischen von faserhaltigem Schüttgut (Fasermaterial) und Kunststoffgranulat für hohe Produktionsleistungen bei minimierten Materialanteil im Extrudersystem und minimierter Faserschädigung beim Aufschmelzprozeß ermöglicht wird und eine Anlage mit Plastifizierextruder zur Durchführung des Verfahrens mit einer angepaßten Geometrie des Extrudergehäuses mit der Einlaßöffnung und den zugehörigen Schneckenelementen zu schaffen, damit die oben beschriebenen Nachteile vermieden werden.

Die Lösung dieser Aufgabe für das Verfahren besteht darin, dass in einem ersten Extruder Kunststoffgranulat auf eine höhere Temperatur als die notwendige Plastifikattemperatur aufgeschmolzen und als flüssiger Kunststofffilm ausgetragen wird,
dass gleichzeitig Fasermaterial soweit vorgewärmt wird, dass es noch problemlos und ohne zu Verkleben in die Zuführöffnung eindosierbar ist, dass in der Zuführöffnung eines Plastifizierextruders der flüssige Kunststofffilm und das Fasermaterial zusammengeführt und innerhalb der Einzug- und Imprägnierstrecke des Plastifizierextruders das Fasermaterial in den flüssigen Kunststoffffilm weitgehend gleichmäßig eingebettet und in der Austrags- und Förderstrecke vollständig auf Plastifikattemperatur gebracht wird,
und dass das Zusammenführen und Einbetten des Fasermaterials mit dem flüssigen Kunststofffilm während der ersten ¼ bis ¾ Umschlingung u ab Kontaktnahme durchgeführt wird,
wobei für das Zusammenführen und Einbetten während der Umschlingung u ein um 2 bis 20 mm vergrößerte Durchmesser D der Gehäusebohrung zur Verfügung steht.

Die Lösung für die Anlage besteht darin, daß als Plastifizierextruder ein gleichlaufender Doppelschneckenextruder mit vorzugsweise auskämmenden Schneckenelementen großer Steigung vorgesehen ist, der über einer Einzugswelle eine schlitzförmige Zuführöffnung aufweist,
wobei ab der Zuführöffnung und im Bereich der Einzugswelle die Zylinderbohrung der Einzugswelle einen um 2 bis 20 mm vergrößertem Durchmesser D aufweist, der vergrößerte Durchmesser eine Erstreckung von ¼ bis ¾ der Umschlingung u aufweist und am Ende des vergrößertem Durchmessers D eine Abstreifleiste angeordnet ist und anschließend die Gehäusebohrung der Einzugswelle auf den Schneckendurchmesser reduziert ist.

Von Vorteil ist insbesondere, daß ein gleichlaufender Doppelschneckenextruder zur Anwendung kommt, bei dem eine schlitzförmige, relativ lange Einführöffnung über der einen Schneckenwelle ist. Diese Schneckenwelle wird in der weiteren Beschreibung als Einzugswelle bezeichnet. Im Bereich der Einzugswelle ist das Schneckengehäuse im Durchmesser so weit vergrößert, damit das aufgeschmolzene Kunststoffband auf den Schneckenstegen aufliegend zu dem Schneckengehäuse noch Freiraum hat. Damit nun beim Umlauf auf den Schneckenstegen der Einzugswelle über die Durchmesservergrößerung des Gehäuses kein Materialaufbau stattfinden kann, wird vor der erneuten Aufnahme des aufgeschmolzenen Kunststoffbandes die Schneckengehäusebohrung auf den Schneckendurchmesser reduziert. Dies wird vorzugsweise mit einer eingesetzten Abstreifleiste realisiert. Damit die Vermischung von Schüttgut und aufgeschmolzenem Kunststoffband/Kunststofffilm möglichst gleichmäßig im Einzugsbereich erfolgt, wird das Schüttgut flach ausgelegt - ohne Haufenbildung - annähernd in der Breite des Kunststoffbandes zugeführt. Im Einzugsbereich werden vorzugsweise auskämmende Schneckenelemente mit relativ großer Steigung verwendet.

Für den Einzug von Schüttgut-wie zum Beispiel Konzentratstäbchen, Schnittfasern, Streufasern, Granulate oder ähnlichem Material - wird der Bereich der zweiten Schneckenwelle in der Gehäusebohrung vorzugsweise nicht vergrößert.

Von Vorteil ist auch, wenn mit Konzentratstäbchen gearbeitet wird und der für die Bauteil-Faserkonzentration erforderliche Kunststoff aufgeschmolzen wird, bevor dieser mit den Konzentratstäbchen oder dem Fasermaterial zusammengeführt wird. Das heißt, die Aufschmelzwärme für den Beimisch-Kunststoff wird ohne das Vorhandensein der Langfasern eingebracht. Deshalb kann in diesem Bereich mit hohen Drehzahlen und großer Dissipation gearbeitet werden. Vorteilhaft ist noch, wenn der Kunststoff auf eine höhere Temperatur, als die im Plastifikat erforderliche Temperatur aufgeschmolzen wird und das Fasermaterial bis zu der Temperatur vorgewärmt wird, bei der dieses noch nicht zum Verkleben neigt und noch problemlos dosiert werden kann.

Damit ist je nach Faser-Konzentratgrad des Schüttgutes und des Bauteil-Fasergehaltes schon weitgehend die Wärme im Material vorhanden, damit nur noch die Wärmeleitung zu den Konzentratstäbchen, welche im flüssigen Kunststoff eingebettet sind, zum Aufschmelzen und Temperaturausgleich erfolgen muß.

Dies geschieht in einer relativ kurzen Förderstrecke im Extruder mit geringem Materialinhalt. Als vorteilhaft hat sich hierbei der gleichlaufende Doppelschnekkenextruder gezeigt. Die Durchmesservergrößerung im Einzugsbereich wird je nach Faserstruktur und Tränkverhalten mehr oder weniger weit stromabwärts in den-geschlossenen Bereich-hineingezogen. Dabei-wird-der vergrößerte Zylinderdurchmesser vorzugsweise spiralförmig in Drehrichtung der Schnecke beendet, damit die Schneckenstege die Fasern oder Stäbchen beim Übergang auf den reduzierten Durchmesser nicht schneiden. Als weitere Möglichkeit der Einzugsverbesserung von Schüttware ist die Ausgestaltung der Einzugsseite mit einer angetriebenen Walze mit Abstreifer oder einer oszillierenden Wand. Die Walze wird dabei mit Umfangsgeschwindigkeiten gleich oder größer der Einzugswelle angetrieben und so das Schüttmaterial hineingezogen. Um den Einziehvorgang weiter zu verbessern, wird das Extrudergehäuse zusätzlich zur Durchmesservergrößerung noch mit einem konischen Einzugsbereich versehen.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: die Anlage zur Durchführung des Verfahrens nach der Erfindung in Seitenansicht und Schnitt B-B nach Figur 2,
- Figur 2: den Plastifizierextruder gemäß der Erfindung nach einem Schnitt A-A aus Figur 1,
- Figur 3: den Plastifizierextruder nach Figur 2 mit kleinerem Umschlingungswinkel u,
- Figur 4: den Plastifizierextruder nach Figur 2 mit Einzugswelle in der Zuführöffnung und
- Figur 5: den Plastifzierextruder nach Figur 2 mit Einlaufbacke.

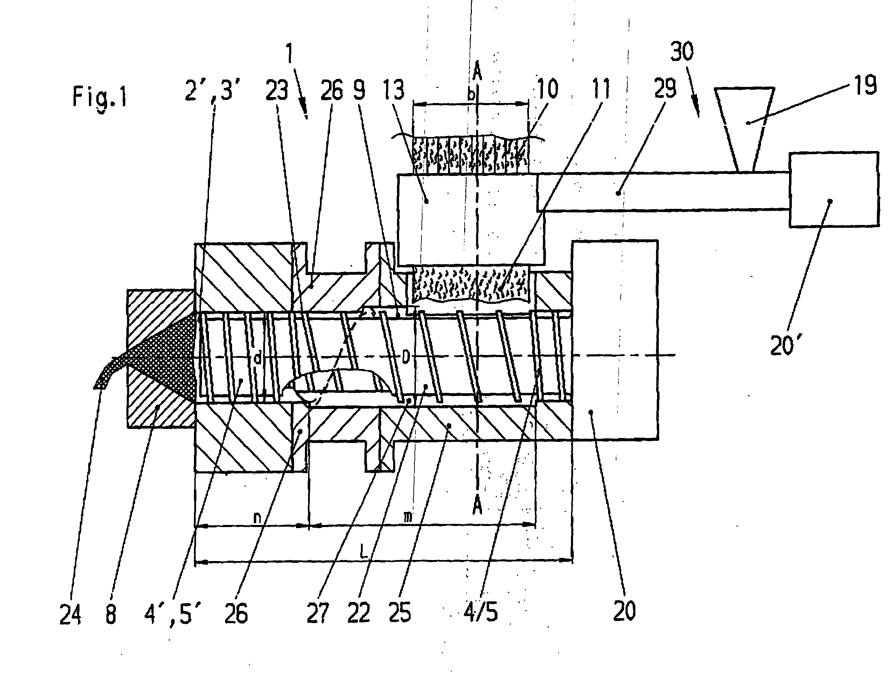

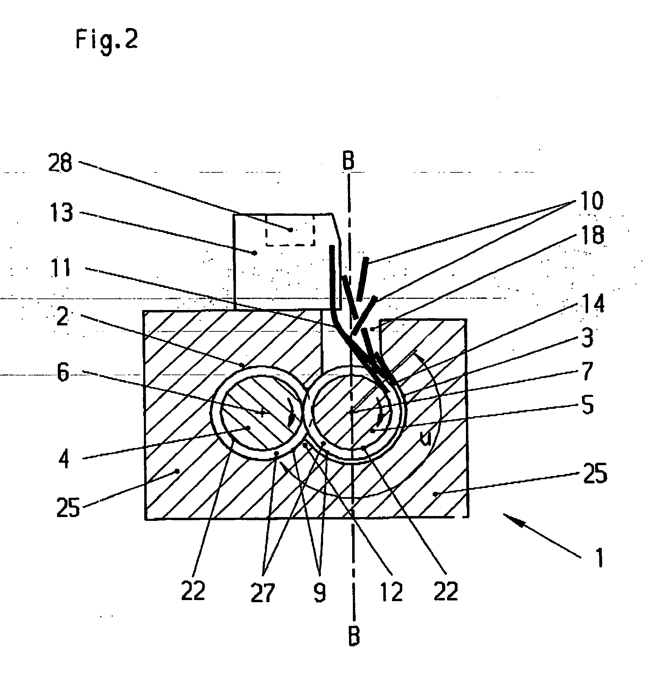

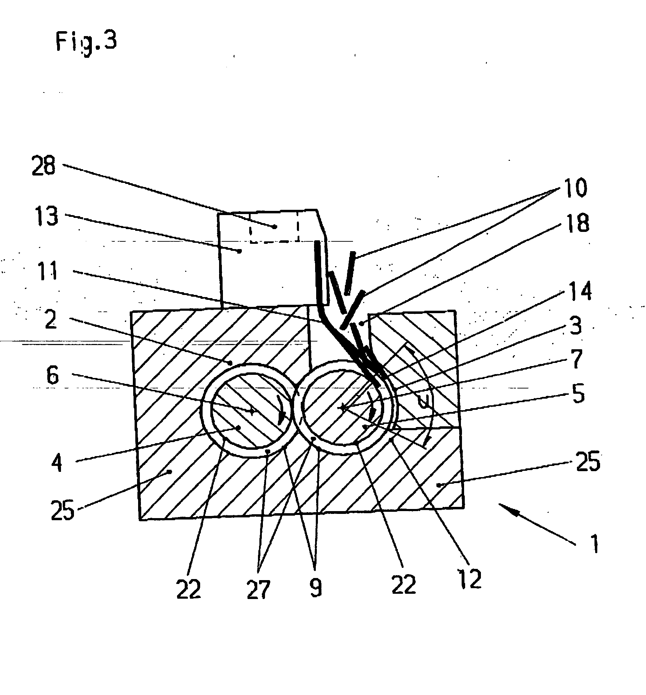

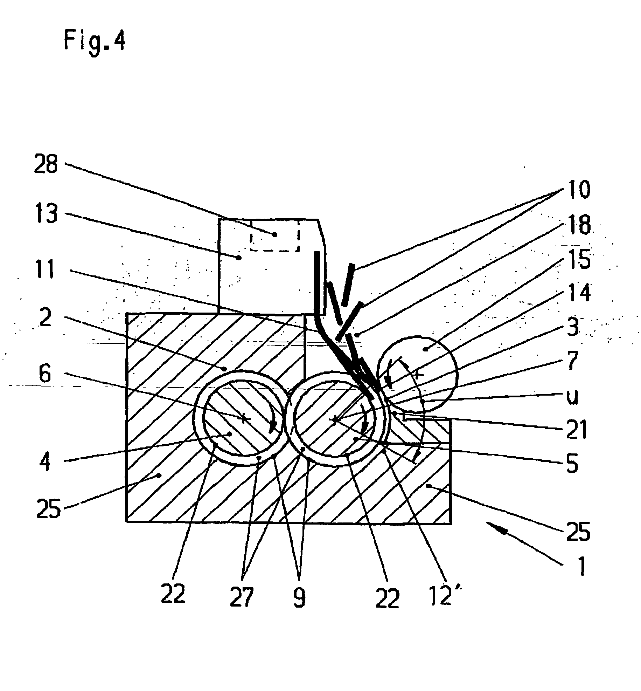

Die Figur 1 zeigt die Anlage zur Durchführung des Verfahrens, umfassend den Plastifizierextruder 1 und den Kunststoff-Aufschmelzextruder 30. In den Figuren 2 bis 5 ist der Plastifizierextruder 1 gemäß der Erfindung als Zwei-Wellen-Extruder mit der Länge L dargestellt. Wie die Figur 1 zeigt, ist die Länge des Plastifizierextruders 1 in zwei Funktionsbereiche eingeteilt und dafür entsprechend ausgebildet, nämlich in eine Einzug- und Imprägnierstrecke m und eine Austrag- und Förderstrecke n. Für den formenden Austrag des fertigen Produktes 24 (= faserverstärkte Kunststoffmasse) ist am Ende eine Austrittsdüse 8 angebracht. Die Figur 2 zeigt im Schnitt A-A aus Figur 1 den Einzug des als Schüttgut einzuführenden Fasermaterials 10 in die Zuführöffnung 18. Der Plastifizierextruder 1 besteht weiter aus dem Gehäuse 25 mit den Gehäusebohrungen 2 und 3 sowie den Extruderachsen 6 und 7 für die Einzugswelle 5 und die Tandemwelle 4 in der Einzug- und Imprägnierstrecke m, dem Gehäuse 26 mit den Bohrungen 2' und 3' für die Extruderwellen 4' und 5' der Austrag- und Förderstrecke n. Nach Figur 1 besteht der Kunststoff-Aufschmelzextruder 30 für die Aufbereitung des Kunststoffs aus dem Einfülltrichter 19 für die Kunststoffgranulatzuführung und Kunststoffüberführung 29. Die Kunststoffüberführung 29 befördert dabei den aufbereiteten Kunststoffilm 11 über die-Kunststoffeinführung 28 in die Austragsdüse 13. Für den Antrieb der Extruderwellen 4/5 und 4'/5' dient der Antrieb 20. lm Fertigungsbetrieb wird das Fasermaterial 10 bei der Förderbewegung in dem Einzugskanal 27 und von hier Richtung Produktaustrag mit den Schneckenelementen des Plastifizierextruders 1 über die Schneckenstege 9 und den Schneckengrund 22 gefördert. Dabei bewegt sich das Fasermaterial 10 mit dem aufgeschmolzenen Kunststoff beim gleichsinnig drehenden Doppelschneckenextruder 1 jeweils von der Einzugswelle 5 zur Tandemwelle 4 und umgekehrt in Austragsrichtung. Das heißt das Fasermaterial 10 wird in einer Art Umschlingung, je nach Einschüttbreite b, mehr oder weniger überlappend in Richtung Austrittsdüse 8 gefördert. Bei diesen Transportgleitbewegungen wird der mit dem Fasermaterial 10 mitgeführte flüssige Kunststoffilm 11 in das Fasermaterial 10 und den Einzelfasern hineingerieben. Wie aus den Figuren 1 bis 5 weiter hervorgeht wird das Fasermaterial 10 in den Eingangsschlitz der Zuführöffnung 18 des Plastifizierextruders 1 mit seiner Breite b parallel zu den Extruderachsen 6 und 7 und annähernd tangential auf die Einzugswelle 5 in einer ¼ bis ¾ Umschlingung entsprechend dem Umschlingungswinkel u sowie von im Durchmesser D um 2 bis 20 mm vergrößerte, ggf. exzentrisch angeordnete, Gehäusebohrung 3 eingezogen. In der Zuführöffnung 18 erfolgt auch das Aufbringen des flüssigen Kunststoffilms 11 direkt auf das einfallende Fasermaterial 10 durch Einpressen in den aus der Austragsdüse 13 auf die Einzugswelle 5 aufgetragenen flüssigen Kunststoffilm 11. Dabei wird das Fasermaterial 10 innerhalb der Einzugs- und Imprägnierstrecke m an den Extruderwellen 4 und 5 einreibend allseitig mit dem flüssigen Kunststoffilm 11 benetzt bzw. getränkt. Anschließend werden die mit dem Kunststoffilm 11 durchimprägnierten bzw. durchgetränkten Einzelfasern des Fasermaterials 10 aus der Einzugs- und Imprägnierstrecke m in die Austrag- und Förderstrecke n geführt, wobei bei Stäbchengranulaten die vollständige Aufschmelzung und Faserverteilung erfolgt. Je nach Stärke S des Fasermaterials 10 und angepaßter Konsistenz der Kunststoffschmelze kann es zweckmäßig sein, wenn das Fasermaterial 10 am Ende der im Durchmesser vergrößerten Gehäusebohrung 3 mit einer Abstreiferkante 12 oder Abstreiferleiste 21 in die Nuten und auf die Schneckenstege 23 der Einzugswelle 5 gedrückt wird. Eine Verbesserung des Einzuges des Fasermaterials 10 wird durch eine in der Zuführöffnung 8 angeordnete Einzugswalze 15 erreicht, wie in Figur 4 dargestellt ist.

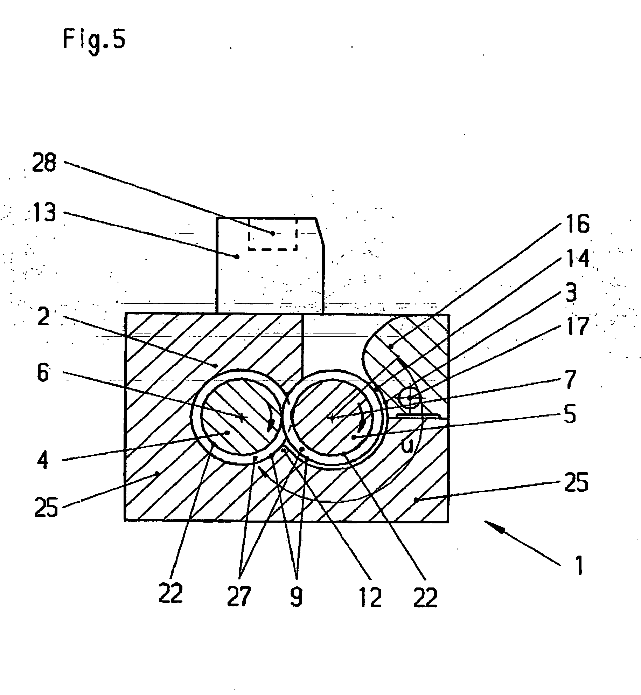

Ebenfalls verbessert wird der Einzug des Fasermaterials 10 in die Zuführöffnung 18, wenn der Einzugsbereich konisch erweitert ist. Eine weitere Verbesserung in Bezug auf eine störungsfreie Führung in der Zuführöffnung 18 für das Fasermaterial 10 und eine mögliche Reinigung dieses Bereichs besteht nach Figur 5 darin, daß eine ein- und ausbaubare Einlaufbacke 16 vorgesehen ist. Diese Einlaufbacke 16 ist gegenüber dem Gehäuse 25 thermisch isoliert und mittels einer Bohrung 17 beheiz- und/oder kühlbar und auf eine Temperatur einstellbar, die etwas unterhalb der Klebetemperatur des Fasermaterials 10 liegt. Vorteilhaft ist weiter, wenn die Einlaufbacke 16 mit einem oszillierendem Antrieb ausgestattet ist und stromabwärts nach der Zuführöffnung 18 die Durchmesserreduzierung d für die Einzugswelle 5 spiralförmig in Drehrichtung endend ausgeführt ist.

### Bezugszeichenliste:

- 1.: Plastifizierextruder
- 2.: Gehäusebohrung (Imprägnierteil)
- 3.: Gehäusebohrung (Imprägnierteil)
- 4.: Tandemwelle (Imprägnierteil)
- 5.: Einzugswelle (Imprägnierteil)
- 6.: Extruderachse
- 7.: Extruderachse
- 8.: Austrittsdüse
- 9.: Schneckensteg
- 10.: Fasermaterial (Schüttgut)
- 11.: flüssiger Kunststoffilm
- 12.: Abstreifkante
- 13.: Austragsdüse
- 14.: Einzugbereich
- 15.: Einzugswalze
- 16.: Einlaufbacke
- 17.: Bohrung in Einlaufbacke 16
- 18.: Zuführöffnung
- 19.: Einfülltrichter
- 20.: Antrieb
- 21.: Abstreiferleiste
- 22.: Schneckengrund
- 23.: Schneckensteg
- 24.: Produkt
- 25.: Gehäuse für m
- 26.: Gehäuse für n
- 27.: Einzugskanal
- 28.: Kunststoffeinführung zur Austragsdüse 13

- 29.: Kunststoffüberführung
- 30.: Kunststoff-Aufschmelzextruder

- b: Einschüttbreite
- D: vergrößerter Gehäusedurchmesser
- d: normaler Gehäusedurchmesser
- m: Einzugs- und Imprägnierstrecke
- n: Austrag- und Förderstrecke
- L: Plastifizierextruderlänge
- S: Stärke des Fasermaterials
- u: Umschlingungswinkel

## Patentansprüche

1. Verfahren zur Herstellung von langfaserverstärkten Kunststoffmassen (24) unter Verwendung eines Plastifizierextruders (1),
bei dem kalte oder vorgewärmte Konzentratstäbchen, Rezyklatchips, Schüttfasem oder sonstige Granulate als Fasermaterial (10) über ein Führungsgatter und eine Vorwärmeinrichtung in der Zuführöffnung (18) des Plastifizierextruders (1) vorzugsweise parallel zu den Extruderachsen (6, 7) und annähernd tangential auf eine Extruderwelle (5) und um die Extruderwellen (5, 6) vortreibend aufgewickelt sowie in die Zylinderbohrungen (2, 3) eingezogen werden,
wobei gleichzeitig in der Zuführöffnung(18) das Aufbringen eines flüssigen Kunststofffilms (11) auf die Extruderwelle (5) und das Einziehen/Einpressen des Fasermaterials (10) in den flüssigen Kunststofffilm (11) erfolgt,
wobei anschließend das Fasermaterial innerhalb einer Einzugs- und Imprägnierstrecke (m) mit den einzelnen Fasern an den Extruderwellen (5, 6) einreibend bzw. durchreibend allseitig mit dem flüssigen Kunststoffilm (11) benetzt bzw. getränkt und in eine Austrag- und Förderstrecke (n) geführt, sowie als weiterverarbeitbare, langfaserverstärkte Kunststoffmasse (24) (Plastifikat) ausgetragen wird, **dadurch gekennzeichnet,**
a) **dass** in einem ersten Extruder (30) Kunststoffgranulat auf eine höhere Temperatur als die notwendige Plastifikattemperatur aufgeschmolzen und als flüssiger Kunststofffilm (11) ausgetragen wird,
b) **dass** gleichzeitig Fasermaterial (10) soweit vorgewärmt wird, dass es noch problemlos und ohne zu Verkleben in die Zuführöffnung (18) eindosierbar ist,
c) **dass** in der Zuführöffnung (18) eines Plastifizierextruders (1) der flüssige Kunststofffilm (11) und das Fasermaterial (10) zusammengeführt und innerhalb der Einzug- und Imprägnierstrecke (m) des Plastifizierextruders (1) das Fasermaterial (10) in den flüssigen Kunststoffffilm (11) weitgehend gleichmäßig eingebettet und in der Austrags- und Förderstrecke (n) vollständig auf Plastifikattemperatur gebracht wird, und
d) **dass** das Zusammenführen und Einbetten des Fasermaterials (10) mit dem flüssigen Kunststofffilm (11) während der ersten ¼ bis ¾ Umschlingung (u) ab Kontaktnahme durchgeführt wird,
e) wobei für das Zusammenführen und Einbetten während der Umschlingung (u) ein um 2 bis 20 mm vergrößerte Durchmesser D der Gehäusebohrung (3) zur Verfügung steht.

2. Verfahren nach Anspruch 1, **dadurch gekennzeichnet, daß** das Fasermaterial (10) gravimetrisch in die Zuführöffnung (18) dosiert wird.

3. Verfahren nach den Ansprüchen 1 und 2, **dadurch gekennzeichnet, daß** das Fasermaterial (10) bandförmig und flach ausgelegt in einer schlitzförmigen Zuführöffnung (18) des Plastifizierextruders (1) gleichmäßig dem flüssigen Kunststofffilm (11) zugeführt und zudosiert wird.

4. Anlage zur Herstellung von langfaserverstärkten Kunststoffmassen aus Fasermaterial (10) und einem flüssigen Kunststofffilm (11) mit einem Plastifizierextruder (1) und einem Kunststoff-Aufschmeizextruder (30), einer das Fasermaterial (10) beheizende Heizeinrichtung in der Transportlinie zum Plastifizierextruder (1), einer Einzugs- und Imprägnierstrecke (m) im Plastifizierextruder (1) zum Einführen des Fasermaterials (11) und zum Mischen einen Plastifizierextruder (1) bestehend aus einem Gehäuse mit zwei Gehäusebohrungen (2, 3) und zweier drehangetriebener Extruderwellen (4, 5), wobei im Gehäuse (25) eine Zuführöffnung (18) zum Einführen des Fasermaterials (10) vorgesehen ist, zur Durchführung des Verfahrens nach den Ansprüchen 1 bis 3, **dadurch gekennzeichnet, daß**
als Plastifizierextruder (1) ein gleichlaufender Doppelschneckenextruder mit vorzugsweise auskämmenden Schneckenelementen großer Steigung vorgesehen ist,
der über einer Einzugswelle (5) eine schlitzförmige Zuführöffnung (18) aufweist,
wobei ab der Zuführöffnung (18) und im Bereich der Einzugswelle (5) die Zylinderbohrung (3) der Einzugswelle (5) einen um 2 bis 20 mm vergrößertem Durchmesser (D) aufweist,
der vergrößerte Durchmesser (D) eine Erstreckung von ¼ bis ¾ der Umschlingung (u) aufweist
und am Ende des vergrößertem Durchmessers (D) eine Abstreifleiste (12) angeordnet ist und anschließend die Gehäusebohrung (3) der Einzugswelle (5) auf den Schneckendurchmesser (d) reduziert ist.

5. Anlage nach Anspruch 4, **dadurch gekennzeichnet, daß** der Einzugsbereich (14) auf die Einzugswelle (5) konisch erweitert ist.

6. Anlage nach Anspruch 4, **dadurch gekennzeichnet, daß** die Durchmesservergrößerung im Einzugsbereich (14) je nach Faserstruktur und Tränkverhalten mehr oder weniger weit stromabwärts in den geschlossenen Bereich des Doppelschneckenextruders (1) ausgeführt ist.

7. Anlage nach einem oder mehreren der Ansprüche 4 bis 6, **dadurch gekennzeichnet, daß** im Einzugsbereich (14) der Zuführöffnung (18) eine angetriebene Einzugswalze (15) mit Abstreiferleiste (21) angeordnet ist.

8. Anlage nach einem oder mehreren der Ansprüche 4 bis 7, **dadurch gekennzeichnet, daß** auf der Schüttgut-Einzugsseite (16) eine ein- und ausfahrbare Einlaufbacke (16) angeordnet ist.

9. Anlage nach einem oder mehreren der Ansprüche 4 bis 8, **dadurch gekennzeichnet, daß** der vergrößerte Gehäusedurchmesser (D) nach der Einlaufbacke (16) spiralförmig in Drehrichtung endet.

10. Anlage nach einem oder mehreren der Ansprüche 4 bis 9, **dadurch gekennzeichnet, daß** die Einlaufbacke (16) zum Schneckengehäuse (25) thermisch isoliert angeordnet ist.

11. Anlage nach einem oder mehreren der Ansprüche 4 bis 10, **dadurch gekennzeichnet, daß** die Einlaufbacke (16) mit einem oszillierendem Antrieb bewegbar ist.

12. Anlage nach einem oder mehreren der Ansprüche 4 bis 11, **dadurch gekennzeichnet, daß** die Temperatur der Einlaufbacke (16) unterhalb der Klebetemperatur des Fasermaterial (10) temperierbar ist.

13. Anlage nach einem oder mehreren der Ansprüche 4 bis 14, **dadurch gekennzeichnet, daß** in der Zuführöffnung (18) austauschbare Abstreifer (21) vorgesehen sind.

## Claims

1. A method for the manufacture of long-fiber-reinforced polymer compositions (24), by using a plasticizing extruder (1) in which cold or preheated small concentrate bars, recycled chips, bulk fibers or other granulates are wound up as fiber material (10) via a guide frame and a preheating device in the feed opening (18) of the plasticizing extruder (1) preferably parallel to the extruder shafts (6, 7) and approximately tangentially onto an extruder shaft (5) and about the extruder shafts (5, 6) in a forward driving manner and are drawn into the cylinder bores (2, 3), with the application of a liquid plastic film (11) occurring simultaneously onto the extruder shaft (5) in the feed opening (18) and the drawing/pressing in of the fiber material (10) occurring into the liquid plastic film (11), with thereafter the fiber material being whetted or saturated within an intake and impregnating section (m) with the individual fibers on the extruder shafts (5, 6) with the liquid plastic film (11) on all sides by being rubbed in or rubbed through and guided to a delivery or conveying section (n) and is supplied as a long-fiber-reinforced polymer composition (24) (plasticized material), **characterized in**
a) **that** in a first extruder (30) the plastic granulate is molten to a higher temperature than the necessary plasticizing temperature and is supplied as a liquid plastic film (11);
b) **that** simultaneously fiber material (10) is preheated to such an extent that it can be dosed easily and without gluing together into the feed opening (18);
c) the liquid plastic film (11) and the fiber material (10) are joined together in the feed opening (18) of a plasticizing extruder (1) and the fiber material (10) is embedded into the liquid plastic film (11) in a substantially even manner within the intake and impregnating section (m) of the plasticizing extruder (1) and is brought completely to plasticizing temperature in the delivery and conveying section (n), and
d) **that** the joining and embedding of the fiber material (10) with the liquid plastic film (11) is performed during the first ¼ to ¾ of the wrap (u) from the time of contact;
e) with a diameter D of the housing bore (3) being available for the joining and embedding during the wrap (u) which is enlarged by 2 to 20 mm.

2. A method according to claim 1, **characterized in that** the fiber material (10) is dosed in a gravimetric manner into the feed opening (18).

3. A method according to the claims 1 and 2, **characterized in that** the fiber material (10) is supplied and dosed evenly in a ribbon-like and flat manner in a slot-shaped feed opening (18) of the plasticizing extruder (1) to the liquid plastic film (11).

4. A unit for producing long-fiber-reinforced polymer compositions made of fiber material (10) and a liquid plastic film (11) with a plasticizing extruder (1) and a plastic fusion extruder (30), a heating device for heating the fiber material (10) in the conveying line to the plasticizing extruder (1), an intake and impregnating section (m) in the plasticizing extruder (1) for introducing the fiber material (11) and a plasticizing extruder (1) for mixing, consisting of a housing with two housing bores (2, 3) and two rotationally driven extruder shafts (4, 5), with a feed opening (18) for introducing the fiber material (10) being provided in the housing (25), for performing the method according to claims 1 to 3, **characterized in that** a synchronized double worm extruder with preferably combing worm elements of steep lead is provided as a plasticizing extruder (1) which comprises a slot-like feed opening (18) above an intake shaft (5), with the cylinder bore (3) of the intake shaft (5) having a diameter (D) which is enlarged by 2 to 20 mm from the feed opening (18) and in the region of the intake shaft (5), the enlarged diameter (D) having an extension of ¼ to ¾ of the wrap (u), and a stripper bar (12) being arranged at the end of the enlarged diameter (D) and thereafter the housing bore (3) of the intake shaft (5) being reduced to the worm diameter (d).

5. A unit according to claim 4, **characterized in that** the intake section (14) to the intake shaft (5) is conically expanded.

6. A unit according to claim 4, **characterized in that** the enlargement of the diameter in the intake section (14) is provided depending on the fiber structure and the impregnation behavior more or less downstream to the closed section of the double worm extruder (1).

7. A unit according to one or several of the claims 4 to 6, **characterized in that** a driven intake roller (15) with a stripper bar (21) is arranged in the intake section (14) of the feed opening (18).

8. A unit according to one or several of the claims 4 to 7, **characterized in that** an extensible and retractable intake jaw (16) is arranged on the intake side of the bulk material.

9. A unit according to one or several of the claims 4 to 8, **characterized in that** the enlarged housing diameter (D) ends after the intake jaw (16) in spiral manner in the direction of rotation.

10. A unit according to one or several of the claims 4 to 9, **characterized in that** the intake jaw (16) is arranged in a thermally insulated manner relative to the worm housing (25).

11. A unit according to one or several of the claims 4 to 10, **characterized in that** the intake jaw (16) can be moved with an oscillating drive.

12. A unit according to one or several of the claims 4 to 11, **characterized in that** the temperature of the intake jaw (16) can be tempered beneath the gluing temperature of the fiber material (10).

13. A unit according to one or several of the claims 4 to 12, **characterized in that** exchangeable strippers (21) are provided in the feed opening (18).

## Revendications

1. Procédé de fabrication de masses de matière plastique (24) renforcées par des fibres longues à l'aide d'une extrudeuse à plastification (1), dans lequel des barrettes de concentré, des flocons recyclés, des fibres en vrac ou autres granulés, froids ou préchauffés, servant de matériau fibreux (10) sont avancés via une grille de guidage et un dispositif de préchauffage dans l'ouverture d'alimentation (18) de l'extrudeuse à plastification (1), de préférence parallèlement aux axes de l'extrudeuse (6, 7) et de façon à peu près tangente d'un arbre d'extrudeuse (5) et enroulés autour des arbres d'extrudeuse (5, 6) et tirés dans les alésages cylindriques (2, 3),
dans laquelle un film de matière plastique liquide (11) est appliqué dans l'ouverture d'alimentation (18) sur l'arbre d'extrudeuse (5) en même temps que le matériau fibreux (10) est tiré/pressé dans le film de matière plastique liquide (11),
dans laquelle le matériau fibreux est ensuite mouillé ou imprégné de toutes parts du film de matière plastique liquide (11) dans un trajet d'introduction et d'imprégnation (m) en frottant avec chacune de ses fibres sur les arbres d'extrudeuse (5, 6) et amené vers un trajet d'évacuation et de transport (n), et évacué sous la forme d'une masse de matière plastique (24) renforcée par des fibres longues pouvant être travaillée (matière plastifiée),
**caractérisé en ce que** :
a) dans une première extrudeuse (30), des granulés de matière plastique sont fondus à une température supérieure à la température de plastification nécessaire et appliqués sous forme de film de matière plastique liquide (11),
b) **en ce que** simultanément, le matériau fibreux (10) est suffisamment préchauffé pour pouvoir être introduit dans l'ouverture d'alimentation (18) sans difficultés et sans coller,
c) **en ce que** dans l'ouverture d'alimentation (18) d'une extrudeuse à plastification (1), le film de matière plastique liquide (11) et le matériau fibreux (10) sont réunis et dans le trajet d'introduction et d'imprégnation (m) de l'extrudeuse à plastification (1), le matériau fibreux (10) est inclus dans le film de matière plastique liquide (11) de façon sensiblement homogène et amené entièrement à la température de plastification dans le trajet d'évacuation et de transport (n), et
d) **en ce que** la réunion et l'inclusion du matériau fibreux (10) avec le film de matière plastique liquide (11) a lieu pendant le premier quart à trois quarts de tour d'enroulement (u) à partir de l'établissement du contact,
e) un diamètre D de l'alésage du corps (3) augmenté de 2 à 20 mm étant créé pour la réunion et l'inclusion pendant le tour d'enroulement (u).

2. Procédé selon la revendication 1, **caractérisé en ce que** le matériau fibreux (10) est dosé par gravimétrie dans l'ouverture d'alimentation (18).

3. Procédé selon les revendications 1 et 2, **caractérisé en ce que** le matériau fibreux (10) est passé à plat en forme de ruban dans une ouverture d'alimentation (18) en forme de fente de l'extrudeuse à plastification (1) et amené et ajouté de façon régulière au film de matière plastique liquide (11).

4. Installation de fabrication de masses de matière plastique renforcées par des fibres longues à partir d'un matériau fibreux (10) et d'un film de matière plastique liquide (11) avec une extrudeuse à plastification (1) et une extrudeuse à fusion pour matière plastique (30), un dispositif de chauffage chauffant matériau fibreux (10) dans la ligne de transport vers l'extrudeuse à plastification (1), un trajet d'introduction et d'imprégnation (m) dans l'extrudeuse à plastification (1) pour l'introduction du matériau fibreux (11) et pour le mélange dans une extrudeuse à plastification (1) composée d'un corps avec deux alésages cylindriques (2, 3) et deux arbres d'extrudeuse (4, 5) entraînés en rotation, le corps (25) comportant une ouverture d'alimentation (18) pour l'introduction du matériau fibreux (10), destinée à mettre en oeuvre le procédé selon les revendications 1 à 3, **caractérisée en ce que** l'extrudeuse à plastification (1) utilisée est une extrudeuse à double vis tournant dans le même sens, avec de préférence des éléments de vis engrenant ensemble à forte pente,
qui possède au-dessus d'un arbre d'introduction (5) une ouverture d'alimentation en forme de fente (18),
l'alésage cylindrique (3) présentant à partir de l'ouverture d'alimentation (18) et au niveau de l'arbre d'introduction (5) un diamètre (D) augmenté de 2 à 20 mm,
le diamètre augmenté (D) s'étendant sur un quart à trois quarts du tour d'enroulement (u),
une bande racleuse (12) étant disposée à la fin du diamètre agrandi (D) et l'alésage (3) du corps de l'arbre d'introduction (5) étant ensuite réduit au diamètre (d) de la vis.

5. Installation selon la revendication 4, **caractérisée en ce que** la zone d'introduction (14) est élargie en forme de cône vers l'arbre d'introduction (5).

6. Installation selon la revendication 4, **caractérisée en ce que** l'augmentation du diamètre dans la zone d'introduction (14) est réalisée plus ou moins loin en aval dans la partie fermée de l'extrudeuse à double vis (1) selon la structure des fibres et leur comportement d'imprégnation.

7. Installation selon une ou plusieurs des revendications 4 à 6, **caractérisée en ce que** qu'un rouleau d'introduction (15) entraîné avec une bande racleuse (21) est disposé dans la zone d'introduction (14) de l'ouverture d'alimentation (18).

8. Installation selon une ou plusieurs des revendications 4 à 7, **caractérisée en ce que** qu'il est prévu du côté d'introduction de la matière en vrac un volet d'entrée (16) pouvant être rétracté et sorti.

9. Installation selon une ou plusieurs des revendications précédentes, **caractérisée en ce que** le diamètre agrandi (D) du corps se termine après le volet d'entrée (16) en forme de spirale dans le sens de rotation.

10. Installation selon une ou plusieurs des revendications 4 à 9, **caractérisée en ce que** le volet d'entrée (16) est disposé avec une isolation thermique vis-à-vis du corps de la vis (25).

11. Installation selon une ou plusieurs des revendications 4 à 10, **caractérisée en ce que** le volet d'entrée (16) peut être déplacé par un entraînement oscillant.

12. Installation selon une ou plusieurs des revendications 4 à 11, **caractérisée en ce que** la température du volet d'entrée (16) peut être régulée en dessous de la température de collage du matériau fibreux (10).

13. Installation selon une ou plusieurs des revendications 4 à 12, **caractérisée en ce que** des racles (21) interchangeables sont prévues dans l'ouverture d'alimentation (18).
